## Europäisches Patentamt

## European Patent Office

## Office européen des brevets

(11) Publication number: **0 067 056 B2**

# (12) NEW EUROPEAN PATENT SPECIFICATION

(45) Date of publication of the new patent specification : 28.08.91 Bulletin 91/35

(51) Int. Cl.⁵ : **B41N 1/08, C22C 21/00, B32B 15/01**

(21) Application number : 82302901.2

(22) Date of filing : 04.06.82

(54) **Lithographic printing plate having an aluminium alloy support.**

(30) Priority : 05.06.81 JP 86460/81

(43) Date of publication of application :
15.12.82 Bulletin 82/50

(45) Publication of the grant of the patent :
16.01.85 Bulletin 85/03

(45) Mention of the opposition decision :
28.08.91 Bulletin 91/35

(84) Designated Contracting States :
DE FR GB

(56) References cited :
DE-A- 1 929 146
DE-B- 2 255 309
FR-A-14 380 96
GB-A- 1 224 226
US-A- 3 397 044
US-A-33 970 44
RESEARCH DISCLOSURE, no. 150, October 1976, page 24, no. 15031, Hampshire (GB); W.S. MILLER et al.: "Stress-relieving aluminum to improve cracking resistance of lithographic printing plates"
Aluminium-Taschenbuch, 13. Auflage 1974, pp. 222+936
Solidification Technology in the Foundry and cast house, von E.Losseck, pp. 484-489
Metali, Heft 3 und 4, Jahrgang 1975
Derwent Patent Abstract 78-20454 A/ll
Derwent Patent Abstract 77-26312 Y 15
Journal of the Institute of Metals, vol. 100, 1972, pp. 301-308

(56) References cited :
Registration Record of International Alloy Designations and Chemical Composition Limits for Wrought Aluminium and Wrought Aluminium Alloys, publ. by the Aluminium Association (June 1 1985)
Aluminium und Aluminiumiegierungen , by Dr. D. Altenpohl, page 57, Springer-Verlag, 1965

(73) Proprietor : FUJI PHOTO FILM CO., LTD.
210 Nakanuma Minami Ashigara-shi
Kanagawa 250-01 (JP)
Proprietor : SUMITOMO LIGHT METAL INDUSTRIES LIMITED
4-4 Marunouchi 1-chome Chiyoda-Ku
Tokyo (JP)

(72) Inventor : Ohashi, Azusa
No. 4000, Kawahiri Yoshida-cho
Haibara-gun Shizuoka (JP)
Inventor : Shirai, Akira
No. 4000, Kawahiri Yoshida-cho
Haibara-gun Shizuoka (JP)
Inventor : Takizawa, Kazushige
No. 4000, Kawahiri Yoshida-cho
Haibara-gun Shizuoka (JP)
Inventor : Terai, Shiro
No. 1-12, Chitose 3-chome Minato-ku
Nagoya-shi Aichi (JP)
Inventor : Tsuchida, Shin
No. 1-12, Chitose 3-chome Minato-ku
Nagoya-shi Aichi (JP)
Inventor : Hayashi, Yoshikatsu
No. 1-12, Chitose 3-chome Minato-ku
Nagoya-shi Aichi (JP)

(74) Representative : Dixon, Donald Cossar et al
Gee & Co. Chancery House Chancery Lane
London WC2A 1QU (GB)

EP 0 067 056 B2

## Description

The present invention relates to a lithographic printing plate having an aluminum alloy(s) support. The support has excellent mechanical strength and printability and can be produced at a relatively low cost.

Lithographic printing plates which are now generally used are obtained by submitting so-called presensitized printing plates (hereinafter referred to as "PS plates") to plate making processing. The PS plates are prepared by coating light-sensitive materials on aluminum plates having surfaces subjected to surface treatments, e.g., a graining treatment, an oxidizing treatment and so on, and drying them. The plate making process includes an imagewise exposing step, a developping step, a step of washing with water, a step of treating with lacquer and so on. It is well known that the areas where the light-sensitive layer remains undissolved after the above-described developping step form the image part and the areas where the light-sensitive layer is removed to expose the underiving aluminum surface become water-acceptable. Accordingly, such water-acceptable portions form the non-image part.

Aluminum plates are generally used as the supports of such lithographic printing plates. Conventional materials used for this purpose are prepared from aluminum alloy plates produced by casting aluminum alloys, e.g., JIS A3003, JIS A1100, JIS A1050, etc.. into ingots using a conventional continuous casting process. The ingots are then submitted to a hot rolling process and a cold rolling process and optionally a heat treatment at an intermediate stage during the rolling processes. The thus-prepared aluminum alloy plates are then subjected to a surface roughening treatment using a mechanical, a chemical or an electrochemical technique and subsequently to an anodic oxidation.

More specifically, in accordance with known methods, aluminum plates are subjected in sequence to a mechanical roughening treatment, a mechanical etching treatment and anodically oxidized film forming processing, as described in U.S. Patent 3,834,998. According to another process, plates are subjected to a chemical etching treatment and subsequently to anodically oxidized film forming processing, as described in Japanese Patent Application (OPI) No. 61304/76 (the term "OPI" as used herein refers to a "published unexamined Japanese patent application"). In another process, aluminum plates are subjected in sequence to an electrochemical treatment, an after-treatment and anodically oxidized film forming processing, as described in Japanese Patent Application (OPI) No. 146234/79. In yet another process, aluminum plates are subjected in sequence to an electrochemical treatment, a chemical etching treatment and anodically oxidized film forming processing, as described in Japanese Patent Publication No. 28123/73. In still another process, aluminum plates are subjected to a mechanical roughening treatment and subsequently to the treatments described in Japanese Patent Publication No. 28123/73.

However, the use of conventional aluminum alloy plates may generate dot-form defects upon both the chemical etching and the electrochemical etching treatments causing in prints obtained. Accordingly, they have turned out to be disadvantageous with respect to obtaining high print quality.

In recent times, printing speeds have been increased. Accordingly, this causes an increase in the stress applied to the printing plate which is fixed mechanically at both ends of a rotating cylinder installed in a printing machine. When put under such stress, aluminum alloy plates often have insufficient mechanical strengths. Accordingly, deformations or breaks of the printing plate at the above-described fixed parts result. A breakdown of the printing plate makes it impossible to continue the printing operation.

Previously, thick aluminum alloy plates had to be employed to ensure sufficient mechanical strength such as dimensional stability. The need for thicker plates was a major factor increasing manufacturing costs of lithographic printing plates.

A primary object of the present invention is to provide an aluminum alloy support for a lithograph printing plate which furnishes a simultaneous solution of the above-described three problems. More specifically, the invention solves the problem of printability, the problem of insufficiency in mechanical strength and the economic problem. Therefore, it is the primary object of the present invention to provide an aluminum alloy support for a lithographic printing plate which is produced at a low cost and has both high printability and mechanical strength which is high enough to be suitable for high speed printing.

The present inventors have carefully studied dot-form stain which tends to be observed on printed matter when aluminum alloy plates prepared by using conventional aluminum alloys are used. Such plates may be comprised of JIS A1100 (the purity of aluminum: 99.0%), JIS A1200 (the purity of aluminum: 99.0%) and JIS A3003 (the purity of aluminum: 98.0—98.5%). The plates are prepared by subjecting them to a chemical or an electro-chemical etching treatment. As a result of these studies the present inventors have confirmed that the dot-form stain is caused by dot-form defects present at the surface of the support. The dot-form defects result from coarse grains of certain intermetallic compounds distributed in the aluminum alloy plates before these plates receive surface treatments.

More specifically, the $Al_6Mn$ compound in the case of the aluminum alloy JIS A3003, and the Al-Fe-Si com-

pound in the case of the pure aluminum series alloys like JIS A1100 and JIS A1200 are necessarily crystallized out in the form of grains several tens of microns in size upon solidification in the casting process. The thus-formed grains are crushed to some degree in subsequently carried out hot rolling and cold rolling processes. However, grains which remain about 5 to 10 microns in size are still distributed even in the final rolled plates. These grains are dissolved and dropped away in the form of a lump during roughening due to the surface treatments, and holes measuring 10 microns or larger in size are left. During actual printing, ink is captured in these holes which creates stains on the prints.

In view of their limited workability, which is determined by the thickness of the ingot and the thickness of the final plate, as well as the fact that these compounds are quite stable to heat and decomposed by heat with difficulty, it is almost impossible to finely divide or eliminate grains of the intermetallic compounds by only rolling processes and heat treatment given at an intermediate stage during the rolling processes.

The present invention relates to preventing dot-form defects from occuring in an aluminum alloy support for a lithographic printing plate. This result is attained by using an aluminum alloy having particular chemical constituents. The desired alloy is obtained by quenching an aluminum alloy upon solidification with such a speed that its intermetallic compounds may be crystallized out in the form of very fine grains. This alloy is used to prepare an aluminum alloy support for a lithographic printing plate having excellent printability by using a material which prevents dot-form defects from occuring. The invention provides a lithographic printing plate having an aluminum alloy support excellent in not only printability but also mechanical strength and economic efficiency. The plate is produced by uniting the material which is very suitable for the above-described use with a regenerated aluminum base plate which is available at a low price and has high mechanical strength.

The alloy can be produced so that intermetallic compounds are distributed in the outer layer material in the form of very fine grains by solidifying the aluminum alloy from the molten state through quenching at a rate of 50°C/sec or more. If the aluminum alloy used contains not less than 1.2% of Fe, undesirable results are obtained. This is because coarse grains may be crystallized out by solidification even when employing a quenching condition as described above and clusters of grains larger than 3 microns in size are still present in the rolled plate.

When 1.2% or less Fe is present in the aluminum alloy, a large portion of Fe, which is formed into a solid solution by the quenching solidification, is crystallized out as fine grains having a grain size of 0.1 micron or less and homogenously distributed in the alloy by a hot rolling process and heat treatment which is carried out during cold rolling processings. A small portion of Fe, which is crystallized out upon the quenching solidification and has a grain size of 5 microns or less, is crushed by the rolling processes and distributed as grains having a grain size of smaller than 3 microns inside the final rolled plate. Accordingly, the objects of the invention are achieved by the support claimed in claim 1 and the composite support claimed in claim 3.

These fine grains of Fe compounds are preferentially dissolved and eliminated by a chemical roughening treatment or an electrochemical roughening treatment. These grains contribute to the formation of a finely roughened surface structure due to their small grain sizes.

The strength characteristics of composite aluminum alloy plates used in lithographic printing plates of the present invention and aluminum alloys to be employed as core material will be described in detail below.

The strength of the composite plate, $\sigma$, can be represented by the following equation:

$$\sigma = \sigma_f \cdot f + \sigma_c(1-f)$$

wherein $\sigma_f$ is the strength of an outer layer material, f is a fraction representing the thickness of the outer layer with respect to the total thickness of the composite plate, and $\sigma_c$ is the strength of a core material. Accordingly, the thickness sharing in the composite plate is designed depending upon the strength $\sigma$ necessitated by the printing plate, the strength $\sigma_c$ of an aluminum material to be used as its core material and the strength $\sigma_f$ of an aluminum material to be used as its outer layer. By considering these factors, the thickness of the outer layer material fitted to receive roughening treatments is determined. However, since the composite plate is etched in its thickness direction, it is necessary for the outer layer to have a thickness of at least 10 microns, preferably 10 to 100 microns.

The thickness of the core material ranges from 80 to 500 microns, preferably 80 to 300 microns.

Core materials which can be employed include aluminum alloys which can acquire mechanical strengths higher than those of materials for the outer layer when they receive a cold rolling process under the same condition. More specifically, it is possible to use various aluminum alloys capable of exhibiting yield strengths not lower than 15 kg/mm$^2$ after they received a cold rolling process at rolling rate of 40% or more. Specific examples of such aluminum alloys include JIS A1100 (which has a yield strengths of 15.0 to 16.5 kg/mm$^2$), JIS A1200 (which has a yield strengths of 15.0 to 16.5 kg/mm$^2$), JIS A3003 (which has a yield strengths of 15.0 to 22.0 kg/mm$^2$), JIS A3004 (which has a yield strengths of 20.0 to 27.0 kg/mm$^2$), JIS A5052 (which has a yield strengths of 22.0 to 29.0 kg/mm$^2$) and so on. However, when aluminum alloys containing 0.5% or more of Fe are employed as the outer layer material, it is advantageous to use alloys of the kind which can readily acquire yield strengths

3

of 20 kg/mm$^2$ or higher, such as JIS A3003, JIS A3004, JIS A5052 and so on.

The use of these aluminum alloys increases manufacturing costs. The increased costs are brought about because they require chemical constituents which must be closely controlled during the manufacturing process. The present invention involves the use of such aluminum alloys which have purities of 99 to 95% but which do not receive particular controls with respect to their chemical constituents. Specific examples of aluminum alloys which can be advantageously used as a core material in the present invention include not only secondary aluminum ingots belonging to the second class (those having aluminum purities of 98% or higher) and the third class (those having aluminum purities of 97% or higher) enacted in JIS H2103, but also aluminum alloys containing impurities in relatively high contents which are obtained by regenerating scrap aluminum which was once used for printing and other purposes. Accordingly, materials of the present invention are superior to conventional materials from an economical point of view.

Core materials having yield strengths not higher than 15 kg/mm$^2$ do not increase the strengths of the resulting composite plates because their yield strengths are below those of the outer layer materials. Furthermore, they tend to cause kinks during handling of the plates in the plate-making process. Therefore, these materials make working difficult. In addition, these materials do not have mechanical strengths high enough to be supposed by both ends of a rotating cylinder installed in a high speed offset rotary press. Therefore, a cut in the printing is caused by deformation at the fixed parts, or printing becomes impossible due to a breakdown of the plate. Consequently, these materials are ineligible as the core material of the present invention.

The yield strengths of 15 kg/mm$^2$ corresponds to that which can be acquired by the aluminum alloy having a purity of 99.0% when it received a cold rolling process at a rolling rate of 75%. Obtaining yield strengths not lower than 15 kg/mm$^2$ can be easily acquired by heightening rolling rates or using aluminum alloys having purities of 99 to 95%. When core materials having yield strengths not lower than 20 kg/mm$^2$ are used, the resulting composite plates have markedly increased mechanical strengths. Even when the total thickness of the composite plate is reduced it can possess a mechanical strengths higher than those of conventional ones. Therefore, the amount of aluminum alloy used as the core material can be reduced. The reduction of the amount used and the use of a low cost ingot are combined to contribute greatly to the reduction of manufacturing costs.

It is apparent from the above descriptions that the present invention realizes excellent printing characteristics, mechanical strength characteristics and economical efficiency. This is accomplished by uniting an aluminum alloy plate having a distribution of finely crystallized intermetallic compounds as the outer layer with an inexpensive aluminum alloy rolled plate having sufficient mechanical strength.

Therefore, it should be understood that an aluminum alloy plate can be used for the outer layer which has excellent printing characteristics and sufficient mechanical strength by itself. If such a plate is used, there is no reason why a reinforcing aluminum alloy plate should be united with the base plate.

Processes for surface treating aluminum alloy plates of the present invention which are used as supports of lithographic printing plates, are described in detail below.

Suitable examples of the graining process which can be applied to the present invention include an electrochemical graining process. In this process, graining is carried out in an electrolytic solution comprising hydrochloric acid or nitric acid by passing an electric current. Other useful processes include mechanical graining processes such as a wire brush graining process wherein aluminum surfaces are scratched with metal wire, a bail graining process wherein aluminum surfaces are rubbed with abrasive bails and abrasives, a nylon brush graining process wherein aluminum surfaces are rubbed with a nylon brush and abrasives, and so on. These graining processes may be employed independently or in combination.

After the graining process, the aluminum plate is subjected to chemical etching processing using an acid or an alkali. If an acid is used as the etching agent, it takes a very long time to destroy the fine structure. Accordingly, the use of acids as etching agents is disadvantageous when applying the present invention industrially. However, the disadvantage can be remedied by using an alkali as the etching agent.

Examples of the alkali agent which can be advantageously employed in the present invention include sodium hydroxide, sodium carbonate, sodium aluminate, sodium metasilicate, sodium phosphate, potassium hydroxide, lithium hydroxide and the like. Of these agents, sodium aluminate is preferred. A preferable concentration of such an alkali in the etching solution and a preferable temperature for the etching processing range from 1 to 50 wt% and from 20 to 100°C, respectively, so as to dissolve the aluminum in an amount of 5 to 20 g/m$^2$.

After the etching process, the aluminum plate is pickled with an acid in order to remove smut remaining on its surface. Acids which can be used for this purpose include nitric acid, sulfuric acid, phosphoric acid, chromic acid, hydroflouric acid, borofluoric acid and the like.

Upon the removal of smut, particularly after the electrochemical roughening treatment, a method as described in Japanese Patent Application (OPI) No. 12739/78, wherein the smut is removed by coming into contact with 15 to 65 wt% sulfuric acid warmed to 50 to 90°C, and the alkali etching method described in Japanese Patent Publication No. 28123/73, can be advantageously employed.

The thus-processed aluminum plates can be used as the supports for lithographic printing plates of the present invention. Also, they can be further submitted to an anodic oxidation processing, a chemical processing or the like.

The anodic oxidation processing can be carried out using techniques which have so far been employed in the art. For example, an anodically oxidized film can be formed on the surfaces of an aluminum support by passing DC or AC current to the aluminum support in an aqueous or a nonaqueous solution containing sulfuric acid, phosphoric acid, chromic acid, oxalic acid, sulfamic acid, benzenesulfonic acid, or a mixture of two or more of these acids.

Processing conditions of anodic oxidation are changed depending on what kind of electrolytic solution is used and, therefore, they cannot be determined indiscriminately. However, as a general guide, it can be said that an electrolytic solution having having a concentration of 1 to 80 wt%, a solution temperature of 5 to 70°C, a current density of 0.5 to 60 ampere/dm², a voltage applied of 1 to 100 v and an electrolyzing time of 10 to 100 seconds can produce a preferable result.

Particularly effective anodically oxidized film forming processes are the processes used in British Patent 1,412,768, wherein anodic oxidation is carried out in sulfuric acid by sending a high density electric current, and the process described in U.S. Patent 3,511,661, wherein anodic oxidation is carried out using phosphoric acid as an electrolytic bath.

The aluminum plate which has been anodically oxidized may be further treated with an aqueous solution of an alkali metal silicate such as sodium silicate or the like using a conventional technique, e.g., a dipping technique, as described in U.S. Patents 2,714,066 and 3,181,461. Alternatively, a subbing layer made up of hydrophilic cellulose (e.g., carboxymethyl cellulose, etc.) containing a water-soluble metal salt (e.g., zinc acetate, etc.) may be additionally provided on the anodically oxidized aluminum plate, as described in U.S. Patent 3,860,426.

On the support of a lithographic printing plate which is prepared in accordance with an embodiment of the present invention, a light-sensitive layer which is known to have been used for PS plates is provided to produce a presensitized lithographic printing plate. The lithographic printing plate obtained by subjecting this PS plate to a plate making process has excellent properties.

Suitable examples of the composition of the above-described light-sensitive layer are described below.

(1) Light-sensitive layer comprised of a diazo resin and a binder

Preferred examples of the diazo resin include those described in U.S. Patents 2,063,631, 2,667,415, 3,679,419, 3,849,392 and 3,867,147 and British Patent 1,312,925 (incorporated herein by reference). Preferred examples of the binder include those described in British Patents 1,350,521 and 1,460,978, and U.S. Patents 4,123,276, 3,751,257 and 3,660,097 (incorporated herein by reference).

(2) Light-sensitive layer comprised of an o-quinonediazide compound

Particularly preferred examples include o-naphthoquinonediazide compounds as described in U.S. Patents 2,766,118, 2,767,092, 2,772,972, 2,859,112, 2,907,665, 3,046,110, 3,046,111, 3,046,115, 3,046,118, 3,046,119, 3,046,120, 3,046,121, 3,046,122, 3,046,123, 3,061,430, 3,102,809, 3,106,465, 3,635,709 and 3,647,443 (incorporated herein by reference) and many other publications.

(3) Light-sensitive layer comprised of a composition containing an azide compound and a binder (macromolecular compound)

Specific examples of the composition include compositions comprised of azide compounds and water-soluble or alkali-soluble macromolecular compounds which are described in British Patents 1,235,281 and 1,495,861, Japanese Patent Application (OPI) Nos. 32331/76 and 36128/76, and so on, and compositions comprised of azido group-containing polymers and macromolecular compounds as binders, as described in Japanese Patent Application (OPI) Nos. 5102/75, 84302/75, 84303/75 and 12984/78.

(4) Light-sensitive layers comprised of other light-sensitive resinous compositions

Specific examples include the polyester compounds disclosed in U.S. Patent 4,101,326, polyvinylcinnamate series resins described in British Patents 1,112,277, 1,313,390, 1,341,004 and 1,377,747, and photopolymerizable photopolymer compositions described in U.S. Patents 4,072,528 and 4,072,527 (incorporated

5

herein by reference), and so on.

The amount (thickness) of the light-sensitive layer to be provided on the support is controlled to about 0.1 to about 7 g/m², preferably 0.5 to 4 g/m².

PS plates, after imagewise exposure, are subjected to processings including a developing step in a conventional manner to form resin images. For instance, a PS plate having the light-sensitive layer (1) constituted with a diazo resin and a binder has unexposed portions of the light-sensitive layer removed by development after imagewise exposure to produce a lithographic printing plate. However, a PS plate having a light-sensitive layer (2) has exposed portions of the light-sensitive layer which are removed by development, with an alkaline aqueous solution after imagewise exposure to produce a lithographic printing plate.

The present invention will now be described in greater detail by reference to the following examples.

Example 1

15 mm thick plates were obtained by subjecting alloys A, B and C, respectively (whose chemical constituents are set forth in Table 1), to quenching solidification using a casting machine which enabled quenching with a rate of about 100°C, sec. These plates were prepared to be used as the outer layer materials.

Alloys D, E and F (whose chemical constituents are also set forth in Table 1) were then cast into 350 mm thick ingots for rolling using a conventional continuous casting technique and then the surface of the ingot was cut. Thereafter, the cut plane was provisionally united with one of the above-described outer layer materials. Combinations of the outer layer material and the core material were A-D B-E. and C-F, and therein a thickness of the outer layer material was 15 mm, and that of the core material was 340 mm. It should be noted that the alloy D was a regenerated aluminum alloy which did not receive any special control with respect to its constituents. These three kinds of compounded ingots were heated to 480°C and subjected to a hot rolling process to obtain completely united composite plates having a thickness of 5 mm. These composite plates were further subjected to a cold rolling process to be turned into 2.0 mm thick plates and thereupon they were submitted to one hour's intermediaireannealing at a temperature of 350°C and then to a final cold rolling process to be turned into 0.30 mm thick plates. The present invention relates to the final plates having combinations A-D and B-E. respectively. The final plate having the combination C-F was comparative material (1).

TABLE 1
Constituent (% by weight)

| Use | Alloy | Fe | Si | Cu | Mn | Mg | Cr | Zn | Ti | Al |
|---|---|---|---|---|---|---|---|---|---|---|
| Outer Layer Material | A | 0.38 | 0.12 | 0.01 | 0.005 | 0.002 | 0.01 | 0.01 | 0.03 | 99.44 |
| | B | 1.05 | 0.13 | 0.02 | 0.004 | 0.003 | 0.01 | 0.01 | 0.03 | 98.84 |
| | C | 1.31 | 0.12 | 0.02 | 0.006 | 0.005 | 0.01 | 0.01 | 0.02 | 98.50 |
| Core Material | D | 0.76 | 0.54 | 0.05 | 0.02 | 0.03 | 0.01 | 0.01 | 0.16 | 98.42 |
| | E | 0.47 | 0.18 | 0.14 | 1.02 | 1.15 | 0.02 | 0.01 | 0.04 | 96.97 |
| | F | 0.39 | 0.16 | 0.15 | 1.00 | 1.12 | 0.02 | 0.01 | 0.03 | 97.12 |
| Single Material | G | 0.38 | 0.14 | 0.02 | 0.007 | 0.002 | 0.01 | 0.01 | 0.02 | 99.41 |

The comparative material (2) was prepared as follows: An alloy G having chemical constituents as set forth in Table 1 was cast into an ingot rolling using a conventional continuous casting technique. Its surface segregation layer was excluded by cutting to make the thickness of the ingot 460 mm, and then heated to a temperature of 525°C and subjected to a hot rolling process to be turned into a plate having a thickness of 5 mm, and then turned into a plate having a thickness of 0.30 mm by the same processes of the invention material.

Each of these aluminum alloy rolled plates was then subjected to a graining treatment in a suspension of pumice stone and water using rotated nylon brushes. The plates were then etched with a 20% aqueous solution of sodium hydroxide at 50°C for 60 seconds so that the amount of aluminum dissolved was 8 g/m². After the plates were washed thoroughly with running water, they were pickled with a 25% aqueous solution of nitric acid and subsequently washed with water to prepare a base plate. The thus-prepared base plate was electrolyzed in an electrolytic bath containing 0.5 to 2.5% of nitric acid by sending AC current thereto with a current density of 20 A/dm$^2$ or more as described in Japanese Patent Application (OPI) No. 146234/79. Next, the surface of the base plate was cleaned by dipping in a 50°C aqueous solution of 15% sulfuric acid for a period of 3 minutes and then processed in order to provide an oxidized film at a coverage of 3 g/dm$^2$ in a 30°C electrolytic bath containing 20% sulfuric acid as a major component.

On each of the thus prepared supports was provided a light-sensitive layer having the following composition at a dry thickness of 2.5 g/m$^2$.

| | |
|---|---|
| Ester Compound of Naphthoquinone-1,2-diazido-5-sulfonyl Chloride with Pyrogallol and Acetone Resin (described in Example 1 of U.S. Patent 3,635,709) | 0.75 g |
| Cresol Novolak Resin | 2.00 g |
| Oil Blue 603 (product of Orient Chemical Co., Ltd.) | 0.04 g |
| Ethylene Dichloride | 16 g |
| 2-Methoxyethylacetate | 12 g |

The thus-obtained presensitized printing plates were each imagewise exposed for 60 seconds by means of a metal halide lamp of 3 kw placed at a distance of 1 meter. The exposed plates were developed with a sodium silicate aqueous solution having an $SiO_2/Na_2O$ molar ratio of 1.2 and an $SiO_2$ content of 1.5 wt%, washed with water, dried an then subjected to a comparative printing test using an offset rotary press SYSTEM-C18 (made by Komori Printing Machine Co., Ltd.).

A printing test was carried out. Comparative materials (1) and (2) showed that stains occured due to dot-form defects. However, materials of the present invention such as materials (1) and (2) which used outer layer materials having fine intermetallic compounds showed essentially not dot-form stain and exhibited excellent printing characteristics.

In addition, the invention materials (1) and (2) had strength characteristics superior to the comparative materials (1) and (2) as shown in Table 2. This was due to the allotment of the aluminum alloys containing impurities in considerable amounts for their respective core materials. Accordingly, when fitted to the rotating cylinder of the rotary press and impressed on continuous sheets of paper, the comparative material (2) was cracked at its fixed parts when 180,000 sheets of paper had been printed. However, the invention materials (1) and (2) was not cracked even after 250,000 sheets of prints had been passed. The comparative material (1), though it was not cracked even after the passage of 250,000 sheets of prints, had a number of dot-form stains because its Fe content was high enough to cause coarsening of its intermetallic compounds. Therefore, this comparative material cannot obtain all the objects of the present invention.

Thickness of the outer layer materials of the invention materials (1) and (2) and the comparative material (1) which were rolled into 0.30 mm thick composite plates, respectively, were 12 to 13 microns.

EP 0 067 056 B2

TABLE 2

| | Alloy | Yield Strength | Tensile strength | Elongation | Maximum length of sliced intermetallic compound | Dot-form stain occurrence | Number of printed sheets at the time of plate cracking |
|---|---|---|---|---|---|---|---|
| | | (kg/mm²) | (kg/mm²) | (%) | (μ) | (number/25 cm²) | |
| Invention Material (1) | Outer Layer : A<br>Core: D | 17.6 | 19.5 | 3 | 1.8 | 0 | 250.000 or more |
| Invention Material (2) | Outer Layer : B<br>Core: E | 27.2 | 28.6 | 2 | 2.6 | 2 | 250,000 or more |
| Comparative Material (1) | Outer Layer : C<br>Core: F | 26.8 | 28.9 | 2 | 4.0 | 16 | 250,000 or more |
| Comparative Material (2) | G | 14.7 | 16.4 | 2 | 6.6 | 17 | 180,000 |

Example 2

A 5 mm thick hot rolled plate having as the outer layer material an alloy H described in Table 3 and as the core material an alloy I described in Table 3, was prepared in the same manner as in Example 1. The thickness of the outer layer material prior to rolling was 15 mm and that of the core material was 340 mm.

At the conclusion of the hot rolling process, the rolled plate was further subjected to a cold rolling process to be turned into a 1.5 mm thick plate and thereafter the plate was subjected to one hour's intermediate annealing at a temperature of 350°C. The plate was then subjected to a final cold rolling process to obtain a 0.3 mm thick composite plate. The thus-obtained composite plate was called the invention material (3). Comparative materials (3) and (4) were prepared as follows: Ingots for rolling which were made up of the alloys J and K, respectively, described in Table 3, were submitted to the homogenization processing at a temperature of 580°C for a period of 8 hours and then cut so as to remove their individual surface segregation layers therefrom. The resulting ingots were heated again to 500°C and then subjected to a hot rolling process to be rolled into mm thick plates. Further, these plates were thinned to 2 mm by a cold rolling process and thereafter the plates were submitted to one hour's intermediate annealing at a temperature of 350°C and then to a final cold rolling process to be turned into 0.30 mm thick plates. The thickness of the outer layer material of the invention material (3) was 10 to 11 microns.

The thus-obtained invention material (3) and the comparative materials (3) and (4), together with the invention materials (1) and (2) and the comparative materials (1) and (2) obtained in Example 1, were subjected to the graining treatment in the suspension of pumice stone and water using rotated nylon brushes as in Example 1. The plates were then etched with a 20% aqueous solution of sodium hydroxide at 50°C for 10 seconds, so that the amount of aluminum dissolved was 3 g/m². After thoroughly washing with running water, the plates were picked with a 25% aqueous solution of nitric acid and subsequently washed with water to prepare base plates. The thus-prepared base plates were each processed in order to form an oxidized film at a coverage of 3 g/m² in a 30°C electrolytic bath containing 20% sulfuric acid as major component. On each of the thus-prepared samples was provided the same light-sensitive layer for the lithographic printing plate as in Example 1, at a dry thickness of 2.5 g/m² in the same manner as in Example 1. The thus-prepared presensitized plates were subjected to the same plate making processing as in Example 1. A printing test for comparison was carried out using the thus-obtained printing plates and the offset rotary press SYSTEM-C18. As shown in Table 4, the results of the printing test are as follows: In each of the cases of the comparative materials (1), (2), (3) and (4), occurence of dot-form stain was 20 or more in number per 25 cm², while in each of the cases of the invention, materials (1), (2) and (3), occurence of the dot-form-stain was hardly observed and exhibited excellent printing characteristics. In addition, cracking of the printing plate at its fixed parts occured in the course of the printing operation after 170,000 sheets of paper had been printed using comparative material (2). Similar cracking occured after 200,000 sheets of paper had been printed using comparative material (3). However, when using any of the invention material (1), (2) or (3), the cracking phenomenon did not occur even after 250,000 sheets had been printed. Accordingly, the invention materials were confirmed to have excellent printing characteristics.

EP 0 067 056 B2

## TABLE 3
### Constituents (% by weight)

| Use | Alloy | Fe | Si | Cu | Mn | Mg | Cr | Zn | Ti | Al | Remark |
|---|---|---|---|---|---|---|---|---|---|---|---|
| Outer Layer Material | H | 0.56 | 0.14 | 0.07 | 0.007 | 0.002 | 0.01 | 0.01 | 0.01 | 99.19 | |
| Core Material | I | 0.60 | 0.27 | 0.15 | 1.14 | 0.01 | 0.01 | 0.01 | 0.01 | 97.80 | JIS A3003 |
| Single Material | J | 0.55 | 0.16 | 0.11 | 0.01 | 0.01 | 0.007 | 0.01 | 0.01 | 99.13 | JIS A1100 |
| Single Material | K | 0.59 | 0.26 | 0.13 | 1.17 | 0.01 | 0.006 | 0.01 | 0.01 | 97.81 | JIS A3003 |

## TABLE 4

| | Alloy | Yield Strength (kg/mm²) | Tensile strength (kg/mm²) | Elongation (%) | Maximum length of sliced intermetallic compound (μ) | Dot-form stain occurrence (number/25 cm²) | Number of printed sheets at the time of plate cracking |
|---|---|---|---|---|---|---|---|
| Invention Material (1) | Outer Layer: A / Core: D | 17.6 | 19.5 | 3 | 1.8 | 0 | 250,000 or more |
| Invention Material (2) | Outer Layer: B / Core: E | 27.2 | 28.5 | 2 | 2.7 | 2 | 250,000 or more |
| Invention Material (3) | Outer Layer: H / Core: I | 19.4 | 21.9 | 3 | 2.0 | 0 | 250,000 or more |
| Comparative Material (1) | Outer Layer: C / Core: F. | 26.8 | 28.9 | 2 | 4.0 | 22 | 250,000 or more |
| Comparative Material (2) | G | 14.7 | 16.4 | 2 | 5.5 | 23 | 170,000 |
| Comparative Material (3) | J | 15.6 | 17.2 | 2 | 6.0 | 47 | 200,000 |
| Comparative Material (4) | K | 20.5 | 22.8 | 2. | 8.0 | 50 or more | 250,000 or more |

EP 0 067 056 B2

Example 3

7 mm thick plate obtained by subjecting alloys L, M and N, respectively, whose chemical constituents are set forth in Table 5. to quenching solidification using the casting machine which enabled quenching with a speed of about 150°C/sec. were subjected to a cold rolling process in order to obtain 3 mm thick plates. The plates were then submitted to one hour's intermediate annealing at a temperature of 350°C and thereafter subjected to a final cold rolling process to obtain 0.30 mm thick plates. The thus-obtained plates are referred to as invention materials (4), (5) and (6), respectively.

The comparative material (5) was prepared as follows: An ingot for rolling which was obtained by casting the alloy O using a conventional continous casting technique without any quenching effect. The ingot was cut so that its surface segregation layer might be removed therefrom and further cut till its thickness became 460 mm. The ingot was then subjected to a hot rolling process at a temperature of 525°C in order to obtain a 5 mm thick plate, and thereafter subjected to a cold rolling process to obtain a 2 mm thick plate. The plate was then submitted to one hour's annealing at a temperature of 350°C, followed by a final cold rolling process to prepare a 0.30 mm thick plate.

Each of the plates were then subjected to plate making processing in the same manner as in Example 1, and then to the comparative printing test using the offset rotary press SYSTEM-C18.

As can be seen from the results shown in Table 6, the invention materials (4), (5) and (6) provide prints of good quality free from dot-form stain.

### TABLE 5
#### Constituents (% by weight)

| Use | Alloy | Fe | Si | Cu | Mn | Mg | Cr | Zn | Ti | Al |
|---|---|---|---|---|---|---|---|---|---|---|
| Single Material | L | 0.33 | 0.11 | 0.01 | 0.01 | 0.01 | 0.01 | 0.01 | 0.02 | 99.49 |
| Single Material | M | 0.55 | 0.13 | 0.05 | 0.01 | 0.02 | 0.01 | 0.01 | 0.01 | 99.21 |
| Single Material | N | 1.11 | 0.14 | 0.03 | 0.01 | 0.02 | 0.01 | 0.01 | 0.01 | 98.66 |
| Single Material | O | 0.30 | 0.14 | 0.02 | 0.007 | 0.002 | 0.01 | 0.01 | 0.02 | 99.49 |

### TABLE 6

| | Alloy | Yield Strength | Tensile strength | Elonga-tion | Maximum length of sliced intermetallic compound | Dot-form stain occurrence |
|---|---|---|---|---|---|---|
| | | $(kg/mm^2)$ | $(kg/mm^2)$ | (%) | $(\mu)$ | (number/25 cm$^2$) |
| Invention Material (4) | L | 17.0 | 18.9 | 2 | 1.5 | 0 |
| Invention Material (5) | M | 19.6 | 21.4 | 2 | 2.0 | 0 |
| Invention Material (6) | N | 20.7 | 22.8 | 2 | 2.5 | 0 |
| Comparative Material (5) | O | 14.5 | 16.1 | 2 | 5.0 | 15 |

While the invention has been described in detail and with reference to specific embodiments thereof, it will be apparent to one skilled in the art that various changes and modifications can be made therein without departing from the scope thereof.

## Claims

1. A lithographic printing plate having an aluminium alloy support comprising:

a rolled plate of aluminium alloy consisting of:

98% or more Al;

Fe in an amount of from 0.33 to 1.2%;

impurities each present in an amount of 0.15% or less;

wherein the rolled plate has a distribution of intermetallic compounds, the compounds having grain sizes of 3 microns or less, which are positioned directly under a roughened outer surface of the rolled plate.

2. A lithographic printing plate as claimed in Claim 1, wherein the surface of the aluminium alloy support is anodically oxidized.

3. A lithographic printing plate having a composite aluminium alloy support comprising:

a plate consisting of 98.0% or more Al, Fe in an amount of from 0.33 to 1.2%, and impurities each of which are present in an amount of 0.15% or less, the plate having a thickness of 10 microns or more; and;

a core material having a surface united with a surface of the plate, the core material being composed of aluminium alloy having a yield strength of 15 kg/mm² or more, wherein the outer surface of the plate is roughened and includes a distribution of intermetallic compounds directly under the outer surface, the compounds having grain sizes of 3 microns or less.

4. A lithographic printing plate as claimed in Claim 3, wherein the outer surface of the aluminium alloy support plate is anodically oxidized.

5. A lithographic printing plate as claimed in Claim 3 or 4, wherein the outer surface of the aluminium alloy support plate has a thickness of from 10 to 100 microns.

## Patentansprüche

1. Lithographische Druckplatte mit einem Träger aus einer Aluminiumlegierung, umfassend:

ein Walzblech aus einer Aluminiumlegierung, bestehend aus:

98 % oder mehr Al;

Fe in einer Menge von 0,33 bis 1,2 %:

Verunreinigungen, die jeweils in einer Menge von 0,15 % oder weniger vorliegen;

wobei das Walzblech eine Verteilung intermetallischer Verbindungen aufweist, die Verbindungen Korngrößen von 3 µm oder weniger besitzen und direkt unter einer aufgerauhten äußeren Oberfläche des Walzblechs angeordnet sind.

2. Lithographische Druckplatte nach Anspruch 1, wobei die Oberfläche des Trägers aus der Aluminiumlegierung anodisch oxidiert ist.

3. Lithographische Druckplatte mit einem zusammengesetzten Träger aus einer Aluminiumlegierung, umfassend:

ein Blech, bestehend 98,0 % oder mehr Al, Fe in einer Menge von 0,33 bis 1,2 % und Verunreinigungen, die jeweils in einer Menge von 0,15 % oder weniger vorliegen, wobei das Blech eine Dicke von 10 µm oder mehr besitzt; und

ein Kernmaterial mit einer Oberfläche, die mit einer Oberfläche des Blechs verbunden ist, wobei das Kernmaterial aus einer Aluminiumlegierung mit einer Spannungs- bzw. Dehnungsbeständigkeit von 15 kg/mm² oder mehr zusammengesetzt ist, wobei die äußere Oberfläche des Blechs aufgerauht ist und eine Verteilung intermetallischer Verbindungen direkt unter der äußeren Oberfläche aufweist und wobei diese Verbindungen Korngrößen von 3 µm oder weniger besitzen.

4. Lithographische Druckplatte nach Anspruch 3, wobei die äußere Oberfläche des Trägerblechs aus der Aluminiumlegierung anodisch oxidiert ist.

5. Lithographische Druckplatte nach Anspruch 3 oder 4, wobei die äußere Oberfläche des Trägerblechs aus der Aluminiumlegierung eine Dicke von 10 bis 100 µm besitzt.

## Revendications

1. Plaque de tirage lithographique comportant un support en alliage d'aluminium, comprenant :

une plaque laminée en alliage d'aluminium constituée de :

au moins 98% d'aluminium ;

une quantité de fer comprise entre 0,33% et 1,2% ;

des impuretés présentes chacune à raison de 0,15% au plus;

dans laquelle la plaque laminée présente une distribution de composés intermétalliques, lesdits composés ayant des grains de dimension égale à 3 microns au plus, qui sont placés directement sous une surface externe rendue rugueuse de la plaque liminée.

2. Plaque de tirage lithographique telle que revendiquée dans la revendication 1, dans laquelle la surface du support en alliage d'aluminium est oxydée anodiquement.

3. Plaque de tirage lithographique comportant un support en alliage d'aluminium comprenant :

une plaque constituée d'au moins 98% d'aluminium, de fer en quantité comprise entre 0,33% et 1,2% et d'impuretés dont chacune est présente à raison d'au plus 0,15%, ladite plaque ayant une épaisseur d'au moins 10 microns, et ;

un matériau de coeur dont une surface est unie à une surface de la plaque, ledit matériau de coeur étant composé en un alliage d'aluminium ayant une résistance à la déformation d'au moins 15 kg/mm², dans laquelle la surface externe de la plaque est rendue rugueuse et comporte une distribution de composés intermétalliques directement sous la surface externe, ces composés ayant des grains de dimension au plus égale à 3 microns.

4. Plaque de tirage lithographique telle que revendiquée dans la revendication 3, dans laquelle la surface externe de la plaque support en alliage d'aluminium est oxydée anodiquement.

5. Plaque de tirage lithographique telle que revendiquée dans la revendication 3 ou 4, dans laquelle la surface externe de la plaque support en alliage d'aluminium présente une épaisseur comprise entre 10 et 100 microns.